# EUROPÄISCHE PATENTSCHRIFT

(11) **EP 0 466 059 B1**
(45) Veröffentlichungstag und Bekanntmachung des Hinweises auf die Patenterteilung: **26.10.1994**
(21) Anmeldenummer: 91111263.9
(22) Anmeldetag: 06.07.1991
(51) Int. Cl.: C03B 37/027

(54) **Verfahren und Vorrichtung zum Ziehen einer optischen Faser aus einer festen Vorform**
Method and apparatus for drawing an optical fibre from a solid preform
Procédé et appareil pour l'étirage d'une fibre optique à partir d'une préforme solide

(30) Priorität: 11.07.1990 DE 4022131
(43) Veröffentlichungstag der Anmeldung: 15.01.1992
(73) Patentinhaber: kabelmetal electro GmbH, 30002 Hannover (DE)
(72) Erfinder: Strackenbrock, Dieter, Dipl.-Ing., W-7000 Stuttgart 31 (DE); Lange, Bernd, W-7014 Kornwestheim (DE)

(56) Entgegenhaltungen:
- EP-A- 0 079 186
- EP-A- 0 105 563
- EP-A- 0 174 699
- PATENT ABSTRACTS OF JAPAN vol. 9, no. 196 (C-297)(1919) 13. August 1985 & JP-A-60 065 747 ( FURUKAWA DENKI KOGYO KK )

## Beschreibung

Die vorliegende Erfindung befaßt sich mit einem Verfahren sowie einer Vorrichtung zum Ziehen einer optischen Faser aus einer festen Vorform, die senkrecht durch einen Ofen geführt und dabei an ihrem unteren Ende, aus dem in Form einer Ziehzwiebel die Faser gezogen wird, auf Ziehtemperatur erwärmt wird, wobei die gezogene Faser anschließend durch einen der Ziehrichtung entgegengerichteten Gasstrom von der Ziehtemperatur heruntergekühlt und dabei das eingeführte Gas unmittelbar zur Kühlung der Faser herangezogen und oberhalb seiner Zuführung wieder abgezogen wird.

Ein Verfahren der gattungsgemäßen Art ist seit längerer Zeit bekannt (EP-A-0 079 186), hierbei erfolgt die Kühlung der aus der Vorform gezogenen Faser durch einen Helium-Gasstrom, der am Ende eines Kühlrohres schräg gegen die Faser geblasen wird. Die nach dem Auftreffen auf die Faser im wesentlichen laminar verlaufende Strömung des kühlenden Gases läßt, wie Versuche gezeigt haben, eine optimale Kühlung in kürzester Zeit nicht zu, so daß die Fertigungs- bzw. Ziehgeschwindigkeiten mittels eines solchen Kühlverfahrens beschränkt sind. Darüberhinaus kann der schräg gegen die Faseroberfläche gerichtete Gasstrom Anlaß zu Schwingungen der Faser sein, die sich nachteilig auf die Qualität der Faser selbst, aber auch auf die anschließenden Beschichtungsvorgänge auswirkt. Durch die mangelhafte Kühlfähigkeit des Gases bei dem bekannten Verfahren führt darüberhinaus eine Erhöhung der Ziehgeschwindigkeit zu einer erheblichen Steigerung des Gasverbrauches.

Bekannt ist zwar bereits ein Verfahren zur Kühlung einer optischen Faser (EP-A-174 699), mit dem die genannten Schwingungen vermieden werden sollen, die Faserkühlung erfolgt durch Wärmeabgabe an eine kühlende Wand, wobei ein Gas als Wärmetransportmedium dient, das ungekühlt in einen Raum außerhalb des eigentlichen Kühlrohres eingeführt wird.

Auch hat man bereits (EP-A-105 563) zur Vermeidung von mechanischen Spannungen innerhalb der Faser beim Ziehen aus der Vorform eine laminare Gasströmung mit einer wenig von der Fasertemperatur abweichenden Temperatur an der Faseroberfläche unmittelbar hinter der sog. Ziehzwiebel entlanggeführt. Die Gasströmung erfolgt dabei zunächst entgegen und nach einer Unlenkung in der Faserziehrichtung.

Ausgehend von diesem Stand der Technik liegt der Erfindung die Aufgabe zugrunde, eine Möglichkeit zu finden, Faserschwingungen auch dann zu vermeiden, wenn das eingeführte Gas unmittelbar zur Kühlung herangezogen wird und dafür zu sorgen, daß der Kühlmittelbedarf auch bei hohen Fertigungsgeschwindigkeiten eingeschränkt wird sowie Fasern hoher Qualität erzeugt werden.

Gelöst wird diese Aufgabe gemäß der Erfindung dadurch, daß dem kühlenden Gasstrom, der zunächst in Abzugsrichtung der Faser geführt und anschließend entgegen der Abzugsrichtung umgelenkt wird, neben der Längsströmung eine Rotationsströmung aufgeprägt wird. Die benötigte Kühlgasmenge kann auf diese Weise bei vergleichbarer Ziehgeschwindigkeit drastisch reduziert bzw. bei ebenfalls noch verminderter Kühlgasmenge die Fertigungsgeschwindigkeit erhöht werden. Zudem wird der Kühleffekt verbessert, ohne daß der gleichförmige Durchlauf der Faser durch die Kühleinrichtung gefährdet ist.

Das Aufprägen einer Rotationsströmung auf die Längsströmung kann zweckmäßig dadurch erfolgen, daß der Gasstrom im Bereich der Zuführung tangential zur durchlaufenden Faser gerichtet ist. Erreicht wird dies z. B. dadurch, daß in Durchführung der Erfindung der Gasstrom im Bereich der Zuführung in einen von der Faser getrennten, diese konzentrisch umgebenden Ringraum eingeführt wird. Jede mechanische Beeinflussung der Ader während des Einführens des Gasstromes ist damit vermieden, die Rotationsströmung pflanzt sich entgegen der Ziehrichtung der Faser nach oben fort und führt zu einer unmittelbaren Kühlung der Faser, die nicht durch an der Faseroberfläche noch verbleibende Restgasschichten behindert wird. Die Kühlstrecke selbst kann dadurch extrem kurz gehalten sowie der Verbrauch an Energie und Kühlgas und nicht zuletzt der Aufwand an Wartung auf ein Minimum beschränkt werden, so daß die Faserfertigung kostengünstig gestaltet werden kann.

Zu einer weiteren Einsparung an Kühlmitteln trägt auch bei, daß der kühlende Gasstrom oberhalb seiner Zuführung in radialer Richtung abgesaugt und im Kreislauf rückgeführt wird. Durch die Absaugung des Kühlmittels in radialer Richtung wird zudem der Effekt der Rotationsströmung, die der Längsströmung aufgeprägt ist, erhöht.

Zur Durchführung des Verfahrens hat sich eine Vorrichtung als besonders zweckmäßig erwiesen, bei der ein in eine Gasaufnahmekammer von oben eingeführtes Faserführungsrohr vorgesehen ist, das in einem Bereich unterhalb der Gaszuführungsöffnung (EN) frei im umgebenden Raum endet. Die Faser ist so durch den einströmenden Gasstrom völlig unbeeinflußt, dieser wird erst nach Umlenkung um das untere Ende des Faserführungsrohres herum entgegen der Abzugsrichtung der Faser nach oben geleitet, wobei diese Strömung gleichzeitig einen Drall in Umfangsrichtung der Faser erfährt.

Als vorteilhaft hat es sich in Weiterführung der Erfindung auch erwiesen, daß die Länge des in die Gasaufnahmekammer eingeführten Faserführungsrohres einstellbar ist. Dies erleichtert eine Anpassung an die jeweils gewählten Fertigungs- oder Ziehgeschwindigkeiten, eine Anregung zum Schwingen der Faser durch das einströmende Kühlmedium ist damit ausgeschlossen.

Wesentlich für die Erfindung ist, wie oben bereits ausgeführt, daß der kühlende Gasstrom zunächst in Abzugsrichtung der Faser geführt und anschließend entgegen der Abzugsrichtung umgelenkt wird. Diesem Zweck dient in Durchführung der Erfindung auch ein an die Gasaufnahmekammer anschließender Führungskonus für die Gasführung und/oder Umlenkung. Dieser Führungskonus führt darüberhinaus zu einer zusätzlichen Verwirbelung des kühlenden Gasstromes.

Als zusätzliche Maßnahme, die zu einer Verkürzung der Kühlstrecke bzw. bei gleicher Kühlstrecke zur Erhöhung der Ziehgeschwindigkeit führt, ist die, daß das Faserführungsrohr im Bereich oberhalb der Gasaufnahmekammer von einem Kühlmittel führenden Rohr umgeben ist. Hierdurch wird ein zusätzlicher Kühleffekt bewirkt, der in kürzester Zeit die Abkühlung der Faser von z. B. 1 700° C beim Eintritt in die Kühlvorrichtung auf unter 60° C am Ende der Kühlvorrichtung bewirkt.

Das Faserführungsrohr wird in Durchführung der Erfindung vorteilhaft mit seinem oberen Ende an die Gasabsaugkammer angeschlossen, damit ist ein störungsfreier Verlauf der die Kühlung bewirkenden Strömungen erreicht. Der Eingang in die Absaugkammer und/oder der Ausgang des Führungskonus sind durch eine Irisblende abgeschlossen, diese sind pneumatisch oder von Hand einstellbar. Die Durchtrittsöffnung für die Faser wird dabei so gewählt, daß die Menge des aus der Kühlvorrichtung austretenden Kühlgases vernachlässigbar ist.

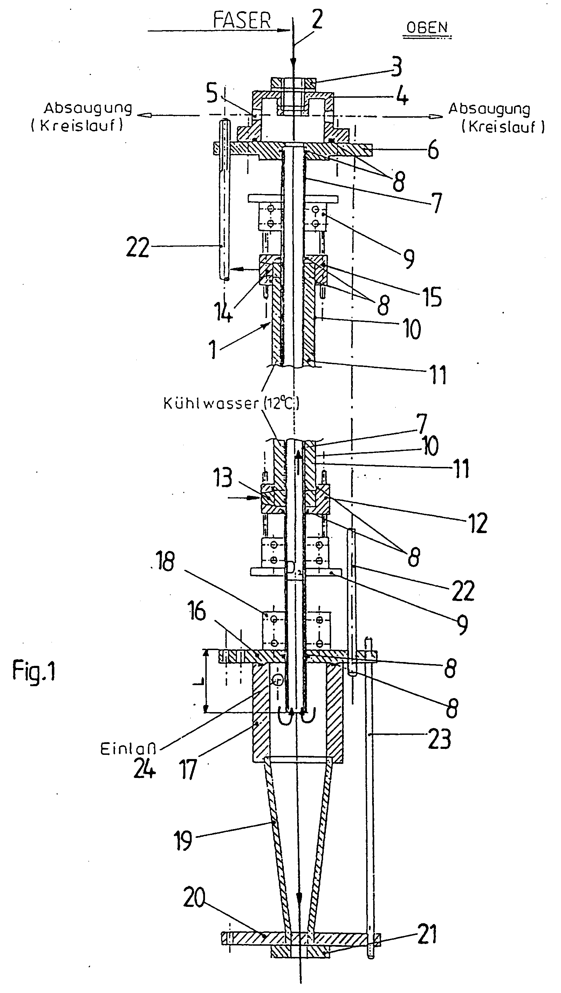

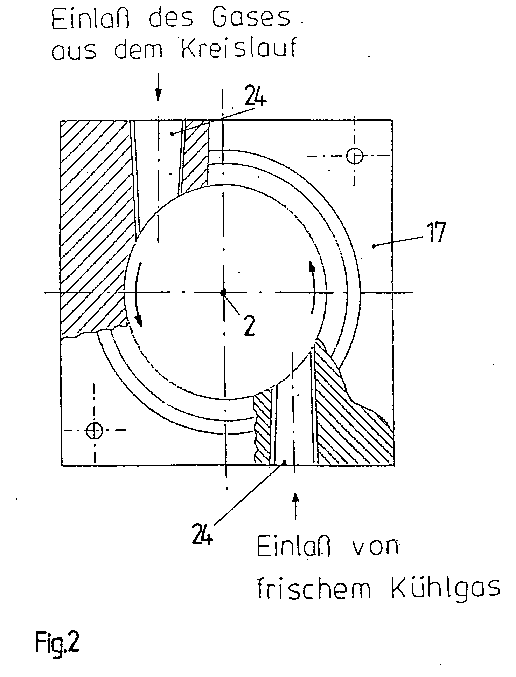

Die Erfindung sei anhand der in den Figuren 1 und 2 als Ausführungsbeispiel dargestellten Kühlvorrichtung an einem senkrecht angeordneten Faserziehofen näher erläutert.

Eine Glasfaser zur optischen Nachrichtenübermittlung wird, wenn sie aus einem Ziehofen kommt, bei einer vertikalen Anlage von oben nach unten durch eine Kühleinrichtung geführt bevor das Beschichtungsmaterial in Form eines geeigneten Kunststoffes z. B. aufgebracht wird. Innerhalb der Kühleinrichtung muß die Faser von etwa 1 500° C bis 1 800° C, das entspricht in etwa der Eintrittstemperatur, auf unter 60° C, nämlich die Austrittstemperatur aus der Kühleinrichtung, abgekühlt werden. Dies ist erforderlich, um möglichst hohe Fertigungsgeschwindigkeiten zu erreichen, aber auch um eine einwandfreie Beschichtung anschließend herbeiführen zu können.

Um das zu erreichen, aber auch entsprechend der der Erfindung zugrundeliegenden Aufgabe, den Verbrauch an Energie und Kühlgas sowie den Aufwand für die Wartung zu reduzieren, dient die in der Fig. 1 dargestellte Anordnung 1, in die die Faser 2, aus einer sogenannten Vorform ausgezogen, von oben her eingeführt wird, Angepaßt an den Durchmesser dieser Faser bildet den Einlaß eine Irisblende 3, die von Hand oder pneumatisch einstellbar ist. In dem Gehäuse 4 sind Öffnungen 5 zum Absaugen des Kühlmittels vorgesehen, dieses Gehäuse ist auf der oberen Halteplatte 6 für das Kühlrohr 7 befestigt. Sogenannte O-Ringe 8 dienen der Abdichtung zwischen Gehäuse 4 und Halteplatte 6 bzw. zwischen dieser Halteplatte und dem Kühlrohr 7. Mit 9 sind die Halterungen für die Kühleinrichtung im Ziehturm bezeichnet; das das Kühlrohr 7 konzentrisch umgebende Mantelrohr 10 dient zur Führung von zusätzlichem Kühlwasser 11, das im Kreislauf geführt ist und am Flansch 12 durch die Bohrung 13 in den Raum zwischen Kühlrohr 7 und Mantelrohr 10 eintritt sowie aus der Öffnung 14 des Flansches 15 nach außen geführt wird. Die Temperatur des Kühlwassers beträgt beispielsweise 12° C.

Im unteren Bereich ist das Kühlrohr 7 durch die Halteplatte 16 hindurchgeführt und endet frei im Raum des Gehäuses 17. Die Länge L des in das Gehäuse 17 eingeführten unteren Endes des Kühlrohres 7 ist mittels der Einstell- und Klemmeinrichtung 18 einstellbar. An das Gehäuse 17 schließt sich nach unten eine konusartige Führung 19 an, deren Ende in der unteren Abschlußplatte 20 gelagert ist. Die Öffnung der konusartigen Führung 19 bzw. der Abschlußplatte 20 wird durch die Irisblende 21 verschlossen. Zum Zusammenhalt der einzelnen Elemente dienen darüberhinaus sogenannte Zuganker 22, die am Umfang verteilt für eine Verspannung der oberen Halteplatte 6 und der unteren Abschlußplatte 20 sorgen.

Schematisch angedeutet ist in der Fig. 1 innerhalb des Gehäuses 17 der Anschluß 24 für das Kühlmittel, beispielsweise Helium, das das Kühlrohr entgegen der Faserabzugsrichtung durchläuft und im Gehäuse 4 durch die Absaugöffnungen 5 im Kreislauf rückgeführt wird.

Um nun sicher zu stellen, daß durch den in das Gehäuse eingeführten Kühlgasstrom die Faser 2 nicht zum Schwingen angeregt wird, ist das Kühlrohr 7, wie dargestellt, mit einer Länge von z. B. 30 bis 70 mm in das Gehäuse 17 eingeführt. Hinzu kommt, daß, wie insbesondere aus der Fig. 2 in einem vergrößerten Maßstab ersichtlich, am Umfang verteilte Gaseinführungsöffnungen 24 vorgesehen sind, die, und das ist entscheidend, nicht auf die Mitte, d. h. auf die Faser, zu gerichtet sind, sondern tangential zur Faser, so daß dem einströmenden Kühlgas, z. B. Helium mit einer Kühltemperatur von 8 - 15° C, eine Rotationsströmung aufgezwungen wird. Diese Rotationsströmung bleibt selbst dann erhalten, wenn, wie durch Pfeile angedeutet, das Kühlgas um das Rohrende herum geführt und entgegen der Abzugsrichtung der Faser 2 nach oben in die Kammer 4 geleitet wird. Der rotierend um die Faser 2 herum bewegte Kühlgasstrom vermeidet den Aufbau örtlicher isolierender Schichten an der Faseroberfläche, die die Kühlwirkung des Kühlgases negativ beeinflussen könnten. Die Rotationsströmung wird im übrigen weiter verstärkt durch die in Umfangsrichtung angeordneten Absaugöffnungen des Gehäuses 4.

Die Länge des Kühlrohres 7 selbst kann zwischen 150 und 250 cm für einen Ziehturm betragen, dessen Ziehofen etwa 8,5 bis 9,0 m über der Bodenfläche angebracht ist. Die obere Irisblende 3 und die untere Irisblende 21 dienen dem Abschluß der Kühleinrichtung 1, während des Zieh- bzw. Kühlvorganges sollte daher der Durchmesser der Irisblende nicht mehr als 5 mm betragen, um zu verhindern, daß Kühlmittelgase in großem Umfang nach draußen gelangen. Mit 23 sind weitere Zuganker im unteren Bereich der Kühleinrichtung bezeichnet, die für eine ausreichende Verspannung der Halteplatte 16 und der unteren Abschlußplatte 20 sorgen.

Nach dem Einlaufen der Faser 2 in die Kühleinrichtung wird die von der Faser eingebrachte Wärmemenge vom kühlenden Medium, d. h. hier Kühlgas, z. B. Helium, aufgenommen und zum Kühlrohr 7 transportiert. Das Kühlrohr selbst kann durch die Umgebungsluft des Raumes gekühlt werden oder, wie in der Fig. 1 dargestellt, eine zusätzliche Wasserkühlung 11 enthalten. In diesem Falle wird die von der Faser abgeführte und dem Kühlrohr 7 zugeführte Wärmemenge von dem Kühlwasser aufgenommen. Dieses Wasser wird dann außerhalb der Kühleinrichtung auf etwa 12° C bis 15° C gekühlt, durch diese zusätzliche Kühlung des Kühlrohres sind weitere Einsparungen an gasförmigem Kühlmittel möglich. Die erfindungsgemäß gestaltete und in den Figuren dargestellte Kühleinrichtung erlaubt es, zu wesentlich höheren und stabileren Ziehgeschwindigkeiten als bisher ohne wesentliche Änderungen am Ziehturm selbst überzugehen. Fertigungsgeschwindigkeiten oberhalb 600 m/min können so erreicht werden.

Wesentlich für die Erfindung ist ferner, daß die für den Kühleffekt benötigte Kühlgasmenge erheblich, d. h. bis zu 90 % des augenblicklichen Kühlverbrauchs bekannter Anlagen reduziert wird.

## Patentansprüche

1. Verfahren zum Ziehen einer optischen Faser aus einer festen Vorform, die senkrecht durch einen Ofen geführt und dabei an ihrem unteren Ende, aus dem in Form einer Ziehzwiebel die Faser ausgezogen wird, auf Ziehtemperatur erwärmt wird, wobei die gezogene Faser anschließend durch einen der Ziehrichtung entgegengerichteten Gasstrom von der Ziehtemperatur heruntergekühlt und dabei das eingeführte Gas unmittelbar zur Kühlung der Faser herangezogen und oberhalb seiner Zuführung wieder abgezogen wird, dadurch gekennzeichnet, daß dem kühlenden Gasstrom, der zunächst in Abzugsrichtung der Faser geführt und anschließend entgegen der Abzugsrichtung umgelenkt wird, neben der Längsströmung eine Rotationsströmung aufgeprägt wird.

2. Verfahren nach Anspruch 1, dadurch gekennzeichnet, daß der Gasstrom im Bereich der Zuführung tangential zur durchlaufenden Faser gerichtet ist.

3. Verfahren nach Anspruch 1 oder 2, dadurch gekennzeichnet, daß der Gasstrom im Bereich der Zuführung in einem von der Faser getrennten, diese konzentrisch umgebenden Ringraum eingeführt wird.

4. Verfahren nach Anspruch 1 oder einem der folgenden, dadurch gekennzeichnet, daß der kühlende Gasstrom oberhalb seiner Zuführung in radialer Richtung abgesaugt und im Kreislauf rückgeführt wird.

5. Vorrichtung zur Durchführung des Verfahrens nach Anspruch 1 oder einem der folgenden mit einem Faserführungsrohr, das mit seinem einen Ende in einer unteren und mit seinem anderen Ende in einer oberen Gasaufnahmekammer endet, wobei in der unteren Gasaufnahmekammer Gaszuführungs- und in der oberen Gasaufnahmekammer Absaugöffnungen für das Gas vorgesehen sind, dadurch gekennzeichnet, daß das Faserführungsrohr in der unteren Gasaufnahmekammer in einem Bereich unterhalb der Gaszuführungsöffnung(en), die tangential in die rohrförmige Gasaufnahmekammer hinein verlaufen, frei im umgebenden Raum endet.

6. Vorrichtung nach Anspruch 5, dadurch gekennzeichnet, daß die Länge des in die Gasaufnahmekammer eingeführten Faserführungsrohres einstellbar ist.

7. Vorrichtung nach Anspruch 5 oder 6, dadurch gekennzeichnet, daß an die Gasaufnahmekammer ein Führungskonus für die Gasführung und/oder Umlenkung anschließt.

8. Vorrichtung nach Anspruch 5 oder 6, dadurch gekennzeichnet, daß das Faserführungsrohr im Bereich oberhalb der Gasaufnahmekammer von einem Kühlmittel führenden Rohr umgeben ist.

9. Vorrichtung nach Anspruch 5 oder einem der folgenden, dadurch gekennzeichnet, daß das Faserführungsrohr mit seinem oberen Ende an die Gasabsaugkammer anschließt.

10. Vorrichtung nach Anspruch 5 oder einem der folgenden, dadurch gekennzeichnet, daß der Eingang in die Gasabsaugkammer und/oder der Ausgang des Führungskonus durch eine Irisblende abgeschlossen ist.

## Claims

1. Process for drawing an optical fibre from a solid preform which is guided vertically through an oven and in this case at its lower end, from which the fibre is drawn out in the form of a drawing bulb, is heated to drawing temperature, the drawn fibre subsequently being cooled down by a gas stream directed opposite to the drawing direction, from the drawing temperature and in this case the gas introduced being directly utilized to cool the fibre and being drawn off again above its inlet, characterized in that in addition to the longitudinal flow a rotational flow is impressed on the cooling gas stream, which is in the first instance guided in the draw-off direction of the fibre and is subsequently deflected against the draw-off direction.

2. Process according to Claim 1, characterized in that the gas stream is directed tangentially to the fibre passing through, in the region of the inlet.

3. Process according to Claim 1 or 2, characterized in that the gas stream is introduced in the region of the inlet in an annular space which is separated from the fibre and concentrically surrounds the latter.

4. Process according to Claim 1 or one of the following claims, characterized in that the cooling gas stream is drawn off above its inlet in a radial direction and is guided back in the circuit.

5. Device for carrying out the process according to Claim 1 or one of the following claims, having a fibre guide tube, which ends by one of its ends in a lower and by its other end in an upper gas receiving chamber, gas inlet openings being provided in the lower gas receiving chamber and draw-off openings for the gas being provided in the upper gas receiving chamber, characterized in that the fibre guide tube ends freely in the surrounding space in the lower gas receiving chamber in a region below the gas inlet opening(s), which extend tangentially into the tubular gas receiving chamber.

6. Device according to Claim 5, characterized in that the length of the fibre guide tube inserted into the gas receiving chamber is adjustable.

7. Device according to Claim 5 or 6, characterized in that a guide cone for the gas guidance and/or deflection adjoins the gas receiving chamber.

8. Device according to Claim 5 or 6, characterized in that the fibre guide tube is surrounded by a tube carrying coolant in the region above the gas receiving chamber.

9. Device according to Claim 5 or one of the following claims, characterized in that the fibre guide tube adjoins, by its upper end, the gas draw-off chamber.

10. Device according to Claim 5 or one of the following claims, characterized in that the entrance into the gas draw-off chamber and/or the exit of the guide cone is closed off by an iris diaphragm.

## Revendications

1. Procédé pour l'étirage d'une fibre optique à partir d'une préforme solide, qui passe verticalement à travers un four et y est portée à température d'étirage à son extrémité inférieure à partir de laquelle la fibre est étirée à la façon d'une pelure d'oignon, procédé dans lequel la fibre étirée est ensuite refroidie, depuis la température d'étirage, au moyen d'un flux de gaz dirigé en sens opposé au sens de l'étirage et dans lequel le gaz introduit est immédiatement utilisé pour le refroidissement de la fibre et évacué à nouveau au-dessus de son point d'introduction, procédé caractérisé par le fait qu'au flux de gaz de refroidissement, qui passe tout d'abord dans le sens de la sortie de la fibre puis change de direction pour venir en sens opposé au sens de la sortie de la fibre, on imprime, en plus de l'écoulement longitudinal, un écoulement en rotation.

2. Procédé selon la revendication 1, caractérisé par le fait que, dans la zone de son introduction, le flux de gaz est orienté tangentiellement à la fibre qui passe.

3. Procédé selon la revendication 1 ou 2, caractérisé par le fait que, dans la zone de son introduction, le flux de gaz est introduit dans un espace annulaire séparé de la fibre et l'entourant concentriquement.

4. Procédé selon la revendication 1 ou l'une des suivantes, caractérisé par le fait que le flux de gaz de refroidissement est aspiré en direction radiale au-dessus de son point d'introduction et remis en circulation.

5. Appareil pour la mise en oeuvre du procédé selon la revendication 1 ou l'une des suivantes, comportant un tube par où passe la fibre et qui se termine, par sa première extrémité, dans une chambre inférieure de réception du gaz et, par son autre extrémité, dans une chambre supérieure de réception du gaz, dispositif dans lequel, dans la chambre inférieure de réception du gaz sont prévues des ouvertures de passage du gaz et, dans la chambre supérieure de réception du gaz, des ouvertures d'évacuation du gaz, appareil caractérisé par le fait que le tube par où passe la fibre se termine, ouvert sur l'espace environnant, dans la chambre inférieure de réception du gaz, dans une zone située en dessous de l'ouverture ou des ouvertures d'introduction du gaz qui sont orientées tangentiellement dans la chambre tubulaire de réception du gaz.

6. Appareil selon la revendication 5, caractérisé par le fait qu'est réglable la longueur du tube de passage de la fibre introduit dans la chambre de réception du gaz.

7. Appareil selon la revendication 5 ou 6, caractérisé par le fait qu'à la chambre de réception du gaz se raccorde un cône de guidage pour guider le gaz et/ou le faire changer de direction.

8. Appareil selon la revendication 5 ou 6, caractérisé par le fait que, dans la zone située au-dessus de la chambre de réception du gaz, le tube par où passe la fibre est entouré par un tube dans lequel passe un réfrigérant.

9. Appareil selon la revendication 5 ou l'une des suivantes, caractérisé par le fait que, par son extrémité supérieure, le tube par où passe la fibre se raccorde à la chambre d'aspiration du gaz.

10. Appareil selon la revendication 5 ou l'une des suivantes, caractérisé par le fait que l'entrée dans la chambre d'aspiration du gaz et/ou la sortie du cône de guidage est obturée par un diaphragme à iris.
